# EUROPEAN PATENT SPECIFICATION

(11) **EP 1 300 306 B1**
(45) Date of publication and mention of the grant of the patent: **14.07.2004**
(21) Application number: 02021531.5
(22) Date of filing: 26.09.2002
(51) Int. Cl.: B60T 7/10

(54) **Hand brake control device for motor vehicles**
Handbremskontrollvorrichtung für Kraftfahrzeuge
Dispositif de commande de frein à main pour véhicules

(30) Priority: 04.10.2001 IT TO20010937
(43) Date of publication of application: 09.04.2003
(73) Proprietor: S.I.V. S.p.A., 10040 Volvera (Torino) (IT)
(72) Inventor: Cavaglia', Renato, 10040 Volvera (TO) (IT); La Rosa, Giacomo, 90144 Palermo (IT)
(74) Representative: Di Francesco, Gianni

(56) References cited:
- EP-A- 0 476 208
- EP-A- 0 546 927
- FR-A- 2 200 816
- US-A- 4 212 211
- US-A- 5 243 856
- PATENT ABSTRACTS OF JAPAN vol. 011, no. 057 (M-564), 21 February 1987 (1987-02-21) -& JP 61 218460 A (NISSAN SHATAI CO LTD), 27 September 1986 (1986-09-27)

## Description

The present invention refers to a device intended to control the hand brake or parking brake of a motor vehicle, consisting of a control lever for the hand brake which is manually operated against the action of a recovery spring and is pivoted on a support bracket connected to a fixed part of the bodywork of the motor vehicle. A drive device is connected to the lever in order to set on at least one brake of a wheel, and inside it there is a rod which, operating on a button, allows to disengage a small crick, mounted on the drive device, from a fixed toothed sector, in order to release the brake after it has been set on

After being set on, the lever of the brake generally remains in the lifted position until the brake is released when the motor vehicle starts riding again.

Control devices for the parking brake are already known, for example from EP-A-0546927 where an additional mechanism allows to lower the control lever while keeping the brake in its active position.

In the additional mechanism an end of the control rod for the small crick remains normally engaged in a seat made on the small crick to block the brake so that the relative rotation between the lever of the brake and the fixed support on the bodywork provided with the toothed sector where the small crick is engaged is prevented.

A disadvantage of a mechanism of this type is that two important functions are assigned to the same detail so that loss of accuracy can arise in functioning, more in particular as far as the locking of the lever at its upper position is concerned.

It is an object of the present invention to eliminate this drawback.

Said object is achieved by means of the present invention relating to a control device for the parking brake of a motor vehicle presenting the characteristics set forth in claim 1.

Additional advantages and characteristics will become clear from the following description which is provided as non-restrictive example of the invention and which refers to the appended drawings in which:

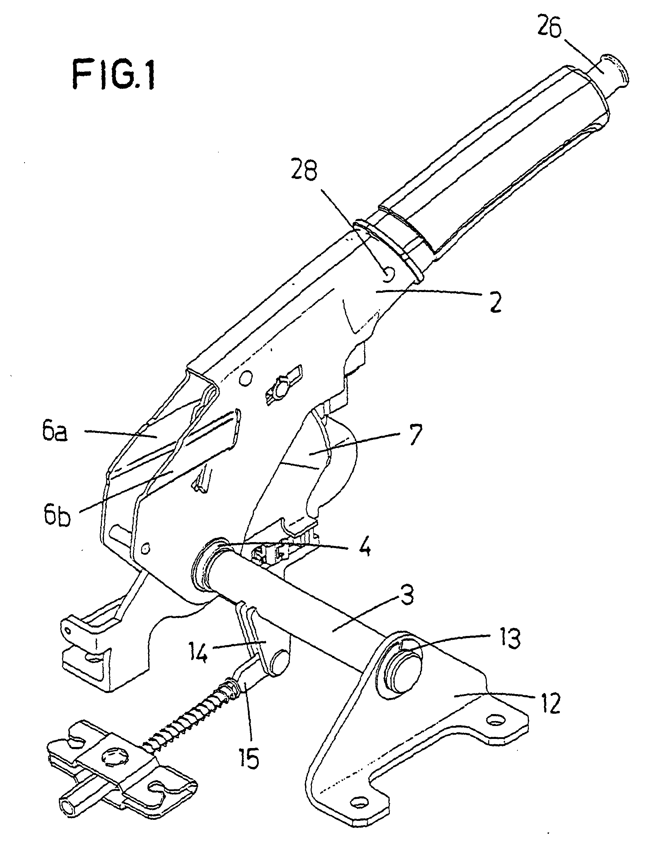

figure 1 is a perspective view of an hand parking brake provided with the device according to the invention;
figure 2 is a side view of the control device of the brake in its rest position;
figure 3 is a side view of the control device for the brake in its active position;
figure 4 is a side view of the control device for the brake when the blocking device of the lever is disengaged;
figure 5 is a side view of the control device for the brake when the lever is in its lower position while the brake is active;
figure 6 represents the parts of which consists the device to control the brake and disengage the lever with the active brake, and
figure 7 is a partially sectioned view of the transmission device of the control from the lever to the parking brake cable.

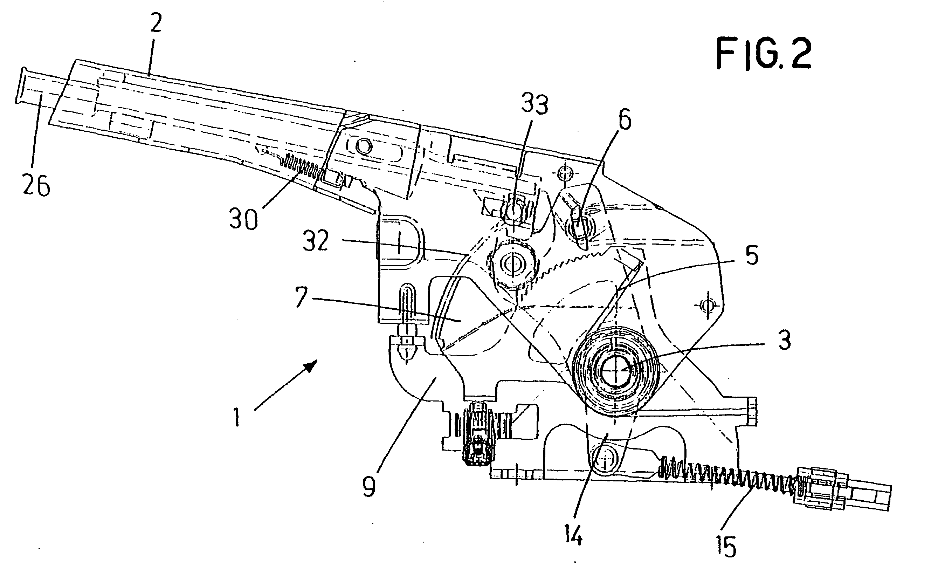

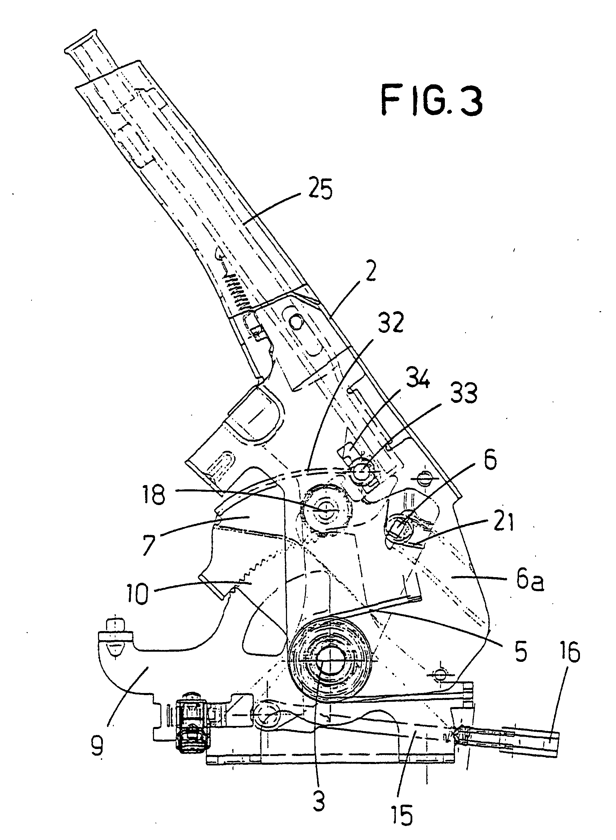

With reference to the figures, reference number 1 indicates a hand parking brake for a motor vehicle, the system of which is not shown here. The brake includes a double-wall control lever 2, the shape of which is that of a reverted U and which is adapted to rotate on an axle 3 by means of bushes 4 and against the action of a spring 5. It moves from a position of rest where it is completely lowered towards the floor of the motor vehicle to an active position where it is lifted upwards (figure 2 and 3).

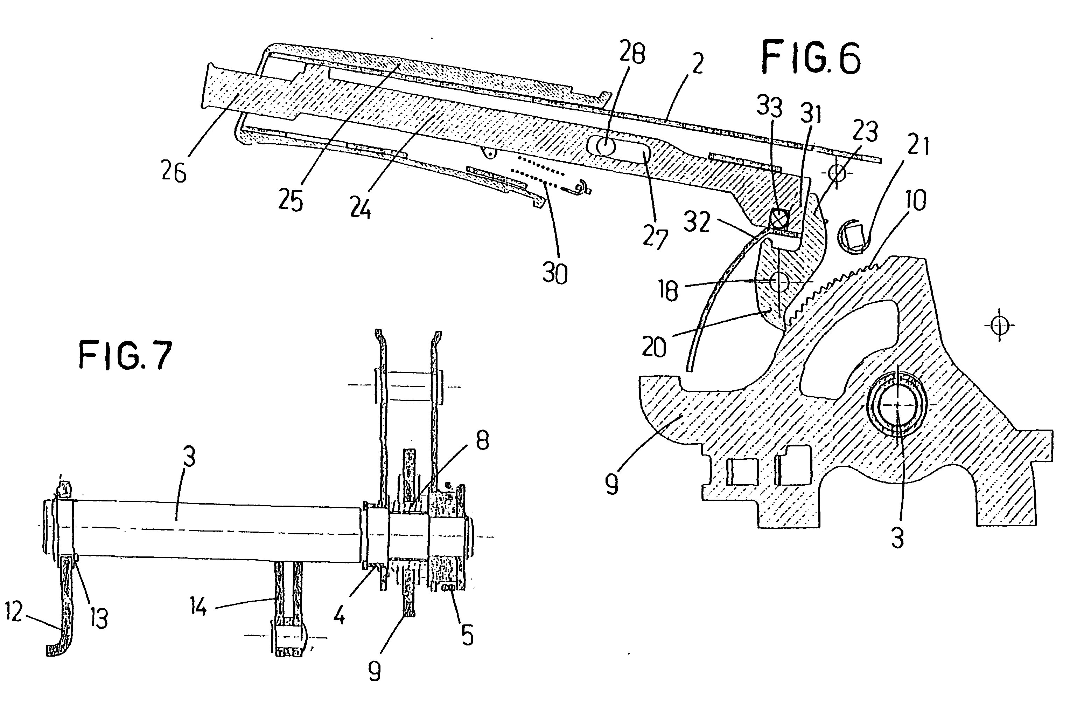

When the control lever (2) rotates from the lower rest position to the active upper position it carries along with it, by means of a through pin 6, laying on the bottom of two guides 6a and 6b made in the walls of said lever, a drive lever 7 of the brake. The drive lever 7 carrying said pin 6, rotates on and with the shaft 3 by means of a coupling made by a bush 8 provided with a grooved gear adapted to be fit on a gear of the same type made at an end of the axle 3 (fig. 7). In turn, the axle 3 rotates, by means of the external surface of the bushing 8, on a first support 9 fixedly connected to the bodywork of the motor-vehicle and carrying a toothed circular sector 10 and on a second support 12 with bush 13, which is also integral with the bodywork. On the axle 4 a double lever 14 is fixed, the ferrule 15 of the cable 16 of the parking brake being connected to it. A stop pawl 20 can freely rotate on an axle 18 fixed to the lever 17, the stop pawl being controlled by a spring 21 which keeps it constantly against the toothed sector 10 so that the mutual position between said lever 7 and the first support 9 is guaranteed.

The stop pawl 20 presents a fingerlike upper extension 23 which can be used in order to rotate it, against the action of the spring 21, as well as to detach it from the toothed sector 10 so that the hand brake is released. In order to actuate on said finger 23, a rod 24 slides along its axle inside the lever 2 and protrudes from its end, the rod being provided with a button-shaped 26 handle 25.

The rod is provided with a slot 27, where a pin 28 in which there is inserted a through pin 28 blocked on the walls of the lever 2. The width of the slot 27 determines the length of the axial stroke of the rod 24 controlled by a spring.

The end 31 of the rod 24 opposite to the one provided with the button 26 which, when in use, lays against the finger 23 being pushed by the spring 30, is supported by a shelf 32 made on two sides of the control lever 7 of the brake. The end 31 is guided by a pin 33 integral with the rod and passing through slots 34 made on the walls of the lever 2.

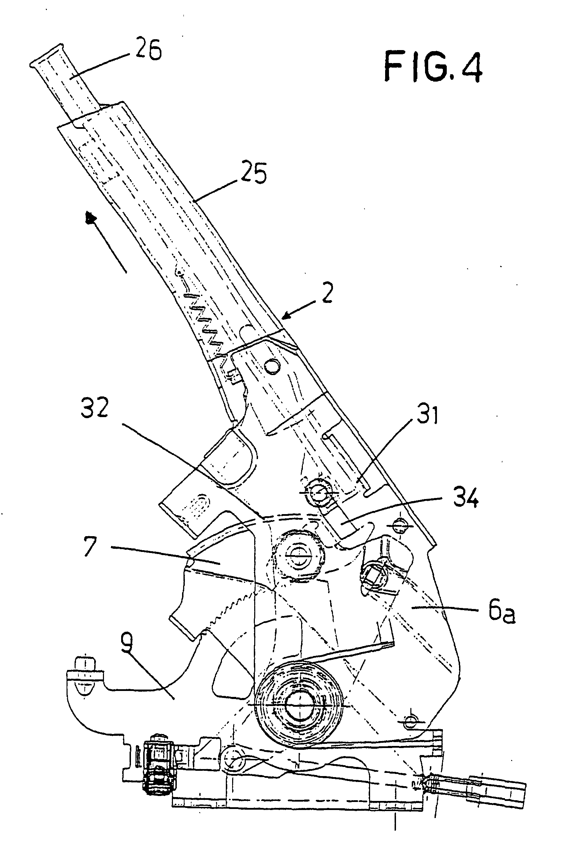

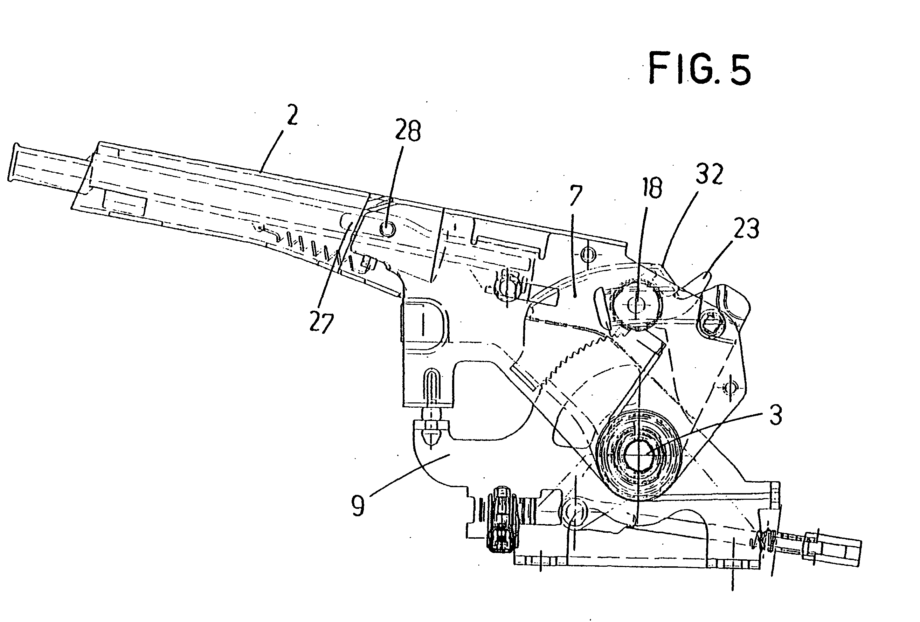

The length of the slots 30 and 34 allows to determine the distance of the two end positions of the useful stroke of the rod 24, in both senses of the axial sliding. The one being the consequence of a pressure on the button 26 intended to disengage the pawl 20 from the tooth sector 10, the other being the consequence of a traction on the button 26 intended to disengage the through pin of the end 31 of the rod 24 from the shelf 32 in order to detach the lever 2 from the drive lever 7 and allow it to go back to the lowered position (figure 4 and figure 5), the pin 6 sliding in the guides 6a 6b.

In short the device for the hand brake works as follows. When the lever 2 is pulled upwards in order to activate the brake, the ends of the guides 6a and 6b lay against the fixed pin 6 on the drive lever 7 to which the tension rod 16 of the brake is connected. When the drive lever 7 rotates it makes the axle 3 to which it is fixed rotate as well together with the double lever 14 which puts the brake under traction. Once the brake is set on the lever 2 remains in its lifted position and the lever 7 is locked in the position that the stop pawl 20 has reached in becoming engaged with the toothed sector 10. In case the lever 2 is to be lowered for reasons of space it is necessary to exert traction on the button 26, so that the pin 33 of the rod is disengaged from the shelf 32 and the lever 2 is released from the coupling with the lever 7.

In order to release the brake it will be necessary to take the lever 2 back to its lifted position and push the button 26 so that the pawl 20 is disengaged by means of the push of the rod 24 on its finger 23, and takes the lever 7 back to its initial position.

The shape and dimensions of the device shown can of course be modified according to manufacturing needs without going beyond the scope of the invention as claimed in the appended claims.

## Claims

1. Device to control the hand brake in motor vehicles, including a control lever (2) that moves from a lower position to an upper position while carrying along by means of abutment means (6, 6a, 6b) a drive lever (7) which is connected to the brake and that passes from a rest position to an active position of said brake, where it is kept by a stop pawl (20) which can become engaged or disengaged to a toothed sector (10) which is fixed to the vehicle; said control lever being connected to the drive lever by means of abutment means that can be disengaged (32, 33) in order to take the control lever back to the lower rest position while the drive lever remains in the actuating position; said stop pawl being controllable in order to become disengaged from the fixed toothed sector (10), by means of a rod (24) slidingly located inside the control lever (2) only when it is engaged to the drive lever (7); **characterised in that** said means that can be disengaged consist of a through pin (33) fixed to the end of the sliding rod (24) located inside the lever (2), adapted to translate, integrally with the rod, in slots (34) made on the lever (2) between two end positions and to become engaged when at one of said positions to a shelf (32) made on the drive lever (7), in order to make the control lever (2) integral with the drive lever (7) at one preferred position.

2. Device as claimed in claim 1, **characterised in that** when in the other end position of the pin (33) passing through the slots (34) the end of the rod (24) actuates on a finger (23) which is integral with the stop pawl (20), so that the tooth (10) is disengaged from said toothed sector (10).

3. Device as claimed in claim 1, **characterised in that** the abutment means making the control lever (2) carry the drive lever (7) include a through pin (6) integral with the drive lever (7) and adapted to end against the internal ends of two parallel guides (6a and 6b) made on the walls of the control lever (2) when this one starts moving from the lower position to the upper position.

4. Device as claimed in claim 1, **characterised in that** the control lever (2) rotates, by means of bushes (4) on an axle (3) which is rotatably integral with the drive lever (7) and in turn rotates on a pair of fixed supports (9, 12).

5. Device as claimed in claims 1 and 4 **characterised in that** the axle (3) carries levers (14) to which the ferrule (15) of the cable (16) of the brake is connected.

## Patentansprüche

1. Vorrichtung zum Betätigen der Handbremse bei Kraftfahrzeugen mit einem Betätigungshebel (2), der sich aus einer unteren Stellung in eine obere Stellung bewegt, während er mit Hilfe von Widerlagermitteln (6, 6a, 6b) einen Antriebshebel (7) mit sich führt, der mit der Bremse verbunden ist, und der aus einer Ruhestellung in eine aktive Stellung der Bremse übergeht, wo er mit einer Sperrklinke (20) gehalten wird, die in einen an dem Fahrzeug befestigten Zahnsektor (10) eingeklinkt oder ausgeklinkt werden kann; der Betätigungshebel ist mit dem Antriebshebel mit Hilfe von Widerlagermitteln verbunden, die, um den Betätigungshebel zurück in seine untere Ruhestellung zu führen, gelöst werden können (32, 33), während der Antriebshebel in der Betätigungsstellung verbleibt; die Sperrklinke ist nur, wenn sie in in dem Antriebshebel (7) in Verbindung steht, mit Hilfe einer innerhalb des Betätigungshebels (2) gleitend angeordneten Stange (24) betätigbar, um aus dem festen Zahnsektor (10) ausgeklinkt zu werden; **dadurch gekennzeichnet, dass** das Mittel, das ausgeklinkt werden kann, aus einem an dem Ende der innerhalb des Hebels (2) gleitend angeordneten Stange (24) befestigten Durchgangsstift (33) besteht, der geeignet ist, sich zusammen mit der Stange in dem Hebel (2) befindlichen Schlitzen (34) zwischen zwei Endlagen zu versetzen und in einer der Endlagen mit einer auf dem Antriebshebel (7) hergestellten Ablage (32) zu verrasten, um den Betätigungshebel (2) mit dem Antriebshebel (7) in einer bevorzugten Lage zu verbinden.

2. Vorrichtung gemäß Anspruch 1, **dadurch gekennzeichnet, dass** wenn in der anderen Endlage des sich durch die Schlitze (34) bewegenden Stiftes (33) das Ende der Stange (24) einen Finger (23) betätigt, der in der Sperrklinke (20) integriert ist, so dass der Zahn (10) aus dem Zahnsektor (10) ausgeklinkt ist.

3. Vorrichtung gemäß Anspruch 1, **dadurch gekennzeichnet, dass** das Widerlagermittel den Betätigungshebel (2) veranlasst, den Antriebshebel (7) mitzuführen, der einen Durchgangsstift (6) umfasst, der in dem Antriebshebel (7) integriert ist und geeignet ist, an den inneren Enden zweier paralleler Führungen (6a und 6b) zu enden, die sich auf den Wandungen des Betätigungshebels (2) befinden, wenn dieser beginnt, sich aus der unteren Lage in die obere Lage zu bewegen.

4. Vorrichtung gemäß Anspruch 1, **dadurch gekennzeichnet, dass** sich der Betätigungshebel (2) mit Hilfe von Buchsen (4) auf einer Achse (3) dreht, die zusammen mit dem Antriebshebel (7) drehbar ist und sich ihrerseits auf einem Paar fester Böcke (9, 12) dreht.

5. Vorrichtung gemäß Anspruch 1 und 4, **dadurch gekennzeichnet, dass** die Achse (3) Hebel (14) aufweist, mit welchen die Hülse (15) des Kabels (16) der Bremse verbunden ist.

## Revendications

1. Dispositif de commande de frein à main pour véhicules motorisés, comprenant un levier de manoeuvre (2) qui se déplace d'une position inférieure jusqu'à une position supérieure tout en transportant au moyen de moyens de butée (6, 6a, 6b) un levier de commande (7) qui est raccordé au frein et qui passe d'une position de repos à une position active dudit frein, où il est maintenu par un cliquet d'arrêt (20) qui peut venir se mettre en prise avec ou se dégager d'une section dentée (10) qui est fixée au véhicule ; ledit levier de manoeuvre étant raccordé au levier de commande au moyen de moyens de butée qui peuvent être dégagés (32, 33) pour ramener le levier de manoeuvre à la position de repos inférieur pendant que le levier de commande reste dans la position d'actionnement; ledit cliquet d'arrêt pouvant être commandé pour se dégager de la section dentée fixe (10), au moyen d'une tige (24) placée de manière coulissante à l'intérieur du levier de manoeuvre (2) seulement lorsqu'il est mis en prise avec le levier de commande (7) ; **caractérisé en ce que** lesdits moyens qui peuvent être dégagés sont constitués par un axe traversant (33) fixé à l'extrémité de la tige coulissante (24) placée à l'intérieur du levier (2), adapté pour translater, d'un seul tenant avec la tige, dans des fentes (34) créées sur le levier (2) entre deux positions d'extrémité et pour venir se mettre en prise lorsque à l'une desdites positions avec un étage (32) créé sur le levier de commande (7) pour rendre le levier de manoeuvre (2) intégral avec le levier de commande (7) à une position préférée.

2. Dispositif selon la revendication 1, **caractérisé en ce que** lorsque dans l'autre position d'extrémité de l'axe (33) passant à travers les fentes (34) l'extrémité de la tige (24) agit sur un doigt (23) qui est d'un seul tenant avec le cliquet d'arrêt (20), de sorte que les dents (10) sont dégagées de ladite section dentée (10).

3. Dispositif selon la revendication 1, **caractérisé en ce que** les moyens de butée amenant le levier de manoeuvre (2) à porter le levier de commande (7) comprennent un axe traversant (6) d'un seul tenant avec le levier de commande (7) et adapté à l'extrémité contre les extrémités internes de deux guides parallèles (6a et 6b) créés sur les parois du levier de manoeuvre (2) lorsque celui-ci commence à se déplacer de la position inférieure vers la position supérieure.

4. Dispositif selon la revendication 1, **caractérisé en ce que** le levier de commande (2) tourne, au moyen de paliers (4) sur un axe (3) qui est d'un seul tenant en rotation avec le levier de commande (7) et à son tour, tourne sur une paire de supports fixes (9, 12).

5. Dispositif selon les revendications 1 et 4, **caractérisé en ce que** l'axe (3) porte les leviers (14) auxquels la virole (15) du câble (16) du frein est raccordée.
